# EUROPEAN PATENT SPECIFICATION

(11) **EP 1 699 302 B1**
(45) Date of publication and mention of the grant of the patent: **14.11.2007**
(21) Application number: 04804692.4
(22) Date of filing: 06.12.2004
(51) Int. Cl.: A23L 1/304, A23C 9/152, A23C 9/20

(54) **CALCIUM-FORTIFIED PROTEIN-BASED BEVERAGE CONTAINING CALCIUM (LACTATE) GLUCONATE CITRATE**
MIT CALCIUM ANGEREICHERTES GETRÄNK AUF PROTEINGRUNDLAGE, DAS CALCIUM(LACTAT)GLUCONATCITRAT ENTHÄLT
BOISSON A BASE DE PROTEINE FORTIFIEE AU CALCIUM CONTENANT DU CITRATE GLUCONATE (LACTATE) DE CALCIUM

(30) Priority: 04.12.2003 EP 03078839
(43) Date of publication of application: 13.09.2006
(73) Proprietor: PURAC Biochem BV, 4206 AC Gorinchem (NL)
(72) Inventor: BOUMAN, Simone, Johanna, NL-4286 EA Almkerk (NL); KREMER, Diderik, Reinder, NL-9722 WG Groningen (NL); MORSINK, Liane, Rebecca, Stefanie, NL-9726 CG Groningen (NL); VORAGE, Marcus, Johannus, Anthonius, Wilhelmus, NL-9458 TC Balloo (NL); HOUDIJK, Catharina, NL-3046 NN Rotterdam (NL)
(74) Representative: Beetz, Tom
(86) International application number: PCT/EP2004/053287
(87) International publication number: WO 2005/053436

(56) References cited:
- EP-A- 0 507 157
- WO-A-00/18258
- US-A- 4 906 482
- US-A- 5 897 892
- US-A- 6 024 994
- US-A1- 2003 211 204
- RASYID F ET AL: "STABILIZATION OF SOY MILK FORTIFIED WITH CALCIUM GLUCONATE" FOOD HYDROCOLLOIDS, IRL PRESS, OXFORD, GB, vol. 4, no. 5, 1991, pages 415-422, XP000617575

## Description

The present invention relates to a calcium-fortified, protein-based beverage to be used to provide dietary calcium supplementation.

Osteoporosis, a degenerative bone disease, is recognized as a major public health problem in many countries. It is the most common skeletal disease in the world and results in a significant burden to the population in terms of quality of life and medical expense.

Dietary calcium deficiency has been determined by medical authorities to be an important risk factor for osteoporosis. Calcium is the basic building block of bone, and the need for calcium in our daily diet has been extensively documented in medical and scientific journals. In addition, many government and public health agencies have recommended that individuals strive to include optimal amounts of calcium in their diet to reduce risk for osteoporosis.

Calcium is an essential nutrient needed throughout life, for a number of important physiologic functions. It is reported that ninety-nine percent of the body's calcium is present in teeth and bones. Therefore, calcium is needed for both formation and maintenance of bones and teeth. The remaining one percent of calcium is located throughout the body in the blood and soft tissues and is ionized in part. In its ionized form, calcium is of great importance for blood coagulation, proper functioning of the heart, nerves, and muscles, and in the permeability of membranes. Current scientific research shows evidence that calcium plays a role in protecting against high blood pressure and colon cancer. If there are inadequate amounts of calcium from dietary sources, skeletal calcium will be sacrificed to satisfy the metabolic needs of the soft tissues. Thus, when dietary calcium intake is inadequate, skeletal metabolism is compromised. Under this circumstance, less bone is accumulated during growth and calcium is withdrawn from the adult skeleton with a concomitant reduction of bone strength. Both of these situations appear to predispose a person to osteoporosis and its consequent fractures.

One of the major sources of available calcium for dietary purposes are dairy products. Since fluid milk provides about 300 milligrams calcium per 240 milliliter (8 ounce) serving, the consumption of approximately 6/7 of a liter of milk would be necessary to provide the present minimum recommended amounts of calcium (based on the USA recommended daily allowance (R.D.A)). As this amount of milk can be overbearing, it has been proposed to enrich the milk with a source of dietary calcium to reduce the amount of fluid intake needed to achieve a specific level of calcium supplement. Further, due to lactose intolerance, milk is may not be a practical source of calcium for some people. In that case, conventional replacement products for milk are soy-based beverages as they provide most of the proteins necessary. However, soy-based beverages do not contain calcium in levels desirable for dietary purposes. Therefore, there is a need for calcium supplements for milk and other protein-based beverages.

Calcium fortified milk products have been developed and used in the past. By increasing the amount of calcium in water and milk via supplementation, it is possible for people to more easily meet their nutritional requirement for calcium. In addition, calcium is best absorbed when accompanied by vitamin D and lactose, both of which are present in milk.

These products are generally fortified with insoluble calcium salts to avoid milk protein instability and coagulation. However, calcium-fortification with insoluble calcium salts have resulted in products that have low calcium concentrations, suspension settlement issues, require exceptionally long processing times, have unacceptable off flavors that are described as bitter, metallic, chalky, and "minerally", poor textures or a combination of these drawbacks. For example, insoluble calcium salts need to be added to products as a suspension, but this often leads to negative changes in taste and texture as well as suspension settlement. In addition, insoluble calcium sources are generally less bioavailable than soluble forms. Although some inorganic salts of calcium, such as calcium salts of bicarbonate, chloride, sulfate and some phosphates, possess a solubility which allows relatively high levels of calcium to be added to beverages, they produce unacceptable off tastes. While attempts have been made to cover up the off flavors or poor textures of previous calcium fortified beverages, such efforts have required the addition of materials such as sugars, artificial sweeteners, and flavorings. This results in the addition of calories and/or other (off) flavors.

On the other hand, the addition of certain highly soluble calcium salts for fortification of milk cause disruption of the ionic balance of the milk which leads to protein destabilization and the formation of a precipitate.

U.S. Pat. No. 4,840,814 discloses a process for making calcium enriched milk which does not coagulate upon boiling. The process generally comprises sterilizing and cooling the milk, upwardly adjusting the pH of the milk to above 6.7 using an alkaline reagent, adding calcium to the milk in the form of a water-soluble calcium salt of an organic acid and lowering the pH of the milk.

EP 586 016 A1 describes calcium fortified powdered milk products and a process for making them. The process comprises blending a milk product with a calcium fortification system to form a calcium fortified mixture, cooling said calcium fortified mixture down to a temperature effective to initiate lactose crystallization, and dehydrating said calcium fortified mixture.

U.S. Pat. No. 4,701,329 discloses calcium enriched and phosphorous enriched fortified milk which provides minimal settling of the calcium source, acceptable flavor, and acceptable viscosity and mouth-feel. The fortified milk may contain up to 100% of the U.S. RDA of calcium, and is made by the addition of tribasic calcium phosphate, carrageenan, and guar gum to fresh milk before pasteurization.

US 2003/0211204 describes calcium-fortified beverages prepared by forming a premix solution. In Example 9 a meal replacement beverage is described comprising gluconic acid, calcium hydroxide citric acid and lactic acid.

Investigators Rasyid and Hansen report in an article in Food Hydrocolloids, Vol. 4, No.5, pp 415-422 (1991), that a high calcium soy milk is prepared wherein calcium gluconate is employed as a calcium source. The preparation also contains a calcium sequestering agent (sodium hexametaphosphate) and a calcium gluconate stabilizing agent. The resultant soy milk is reported to possess a calcium content which is comparable to bovine milk and which has satisfactory heat stability.

WO00/18258 describes the fortification of milk with calcium without affecting protein stability by the addition of a calcium source and at least two anions selected from a group comprising gluconate, citrate and lactate. The use of calcium(lactate) gluconate citrate is not described here.

US 2003/0211204 describes mineral fortified beverages comprising solubilized mineral, and an acid component such as lactic acid, gluconic acid, phosporic acid, citric acid or mixtures thereof. The publication does not describe the use of calcium(lactate) citrate gluconate.

US 4,906,482 describes the fortification of soy-milk by adding a polyphosphate and a calcium source. The calcium source may be any calcium salt suitable for human consumption such as a calcium salt of lactic acid, citric acid, gluconic acid, or mixtures thereof.

It will be clear from the above that there is still a need for calcium-fortified protein-based beverages with a good taste, texture and protein-stability.

To this end, the present invention is directed to a calcium-fortified protein-based beverage characterised in that the beverage is calcium-fortified by means of a calcium (lactate) gluconate citrate.

Within the context of the present description protein-based beverage is defined as any beverage containing more than four or more grams of protein per serving and includes both beverages based on cow's milk, as well as on soy milk. The milk to be fortified may be any type of milk such as skimmed milk, low fat milk, whole milk, non fat milk, condensed milk, filled milk, and evaporated milk.

The calcium-fortified protein-based beverage according to the invention provides a bioavailable source of calcium and excellent solubility without negatively affecting taste, texture and protein stability. It was found that, in contrast to other conventional calcium salts, the calcium (lactate) gluconate citrate causes less denaturalisation of the proteins. In addition, the fortified protein-based beverage of the present invention is suitable for use as an ingredient to use in any food product where protein-based beverage is used, including but not limited to dry powdered milk such as infant formulas, hard cheese, cottage cheese, farmer's cheese, pot cheese, creamy soups, sauces, baked goods, puddings, yoghurts, ice creams, and nutritional drinks and shakes such as meal replacement beverages. For some of these applications the protein-based beverage needs to be modified such as acidification and/or dehydration. Within the context of the present description modified calcium fortified protein-based beverage means the calcium-fortified protein-based beverage which has been submitted to any modification to make the beverage suitable for use in the above-mentioned applications. For example, the calcium-fortified protein-based beverage needs to be dehydrated to form dry powdered milk. Said dehydration techniques such as spray-drying are known in the art and need no further elucidation here. The term "meal replacement beverage" refers to any beverage providing complete nutrition, including the vitamins and minerals known to be essential for human health, as well as protein, carbohydrate and fat, for example, including but not limited to Slimfast®, Ensure®, and Boost®.

Calcium gluconate citrate and calcium lactate gluconate citrate salts are known from WO 03/031635. These types of salts may be prepared according to Example 6 of this patent publication.

The use of these calcium salts in protein-based beverage has not been disclosed in said publication, nor has its good taste and its relatively low impact on the protein stability in protein-based beverages been acknowledged herein. These types of double and triple salts appear to have surprising physical and organoleptic properties. For instance, the solubility of calcium gluconate citrate is totally different from the solubilities of respectively calcium gluconate and calcium citrate. Also its impact on the protein-stability differs. Further, the taste of calcium gluconate citrate in beverages also differs completely from the taste of calcium gluconate and calcium citrate in beverages when added in the same amounts to the beverage. In the present invention it is essential that the double or triple salt contains both gluconate and citrate, in order to reach the solubility and taste demands.

The calcium-fortified protein-based beverage of the present invention may be flavored and sweetened to improve its organoleptic acceptability. Known natural sweetening agents such as corn syrup solids, glucose, fructose, sucrose and the like, as well as artificial sweeteners such as saccharin, cyclamates and aspartame can be added in amounts sufficient to provide a sweet flavor. Natural and artificial flavors including fruit flavors can also be added. The calcium-fortified protein-based beverage of the present invention can also include fruit juice or fruit juice extract such as citrus fruits and/or cranberry juice as desired. Natural or artificial coloring can be added as desired.

The calcium-fortified protein-based beverages of the invention can also include other ingredients normally found in protein-based drinks such as preservatives, stabilizing agents, and the like. The beverages can also contain additional protein for protein fortification, vitamins and minerals as well as agents, which contribute to calcium absorption.

Trace amounts of magnesium and zinc salts may contribute to absorption. These types of mineral cations and other nutrient mineral cations may also be added to the protein-based beverage according to the invention in the form of a soluble salt. In a preferred embodiment such additional nutrient mineral cations are added as part of the counter-cations of the calcium (lactate) gluconate citrate. For the preparation of these types of calcium (lactate) gluconate citrates reference may be had to WO 03/031635.

In order to enhance the solubility of the calcium (lactate) gluconate citrate even more, the particle size of the material may be reduced to 80 microns or less.

The calcium gluconate/calcium citrate weight ratio in the single strength beverage may vary from 1:2 to 4:1, preferably 1:2 to 3:1, more preferablyl:2 to 2:1 and most preferably 1:2 to 1:5. The calcium lactate /(calcium gluconate + calcium citrate) ratio may vary from 0:1 to 2:1. Thus, the calcium source of the beverage according to the invention does not necessarily contain lactate. It may contain all variations between pure calcium gluconate citrate and the triple salt of calcium lactate gluconate citrate, in which the weight ratio of calcium lactate/(calcium citrate + calcium gluconate) preferably varies from 0:1 to 2:1. Also combinations of the various calcium (lactate) gluconate citrate salts may be used.

The beverages according to the invention may be in the form of a ready-to-drink beverage (also called single-strength beverage), but also in the form of a syrup, concentrate or powdered drink, which upon addition of water result in a single strength beverage.

A proposed procedure for preparing the calcium-fortified protein-based beverages of the invention includes the steps of dissolving the calcium (lactate) gluconate citrate with the other ingredients in part of the protein-based beverage to be fortified in order to prepare a pre-slurry. After dissolving or mixing, the rest of the protein-based beverage is added to the mixture or vice versa. Alternatively, the calcium (lactate) gluconate citrate is added directly to the protein-based beverage to be fortified, optionally together with all the ingredients. The calcium (lactate) gluconate citrate may also be added in solution to the protein-based beverage to be fortified. The order and time of addition of the ingredients depend on the process parameters and type of the ingredients. Part or the entire protein-based beverage to be fortified may be replaced by juice. Optionally, the resulting solution or dispersion is pasteurized or sterilized. The pasteurization/sterilization may occur prior to the addition of the calcium (lactate) gluconate citrate. In that case only the protein-based beverage to be fortified is pasteurized/sterilized, rather that the resulting calcium-fortified protein-based beverage.

As used herein, the term "pasteurized" or "pasteurization" refers to treatment processes where materials are heated, without radiation, to temperatures and for periods of time sufficient to at least partially sterilize the material against microbial, mold growth and yeast, without substantial alteration of the chemical composition of the material. The terms "pasteurize" and "pasteurization" include the more restrictive terms "sterilize" and "sterilization" where the treated material is substantially free of microbial and mold growth.

The present invention is more fully explained by means of the Example below, which is to be considered as illustrative only.

### EXAMPLE

Stability tests of calcium lactate gluconate (ratio 80/20 and calcium lactate gluconate citrate were done in presence of protein. To this end calcium lactate gluconate and calcium lactate gluconate citrate were added to milk and soy milk so that 600 ppm calcium were added. After heat treatment the calcium lactate gluconate-containing milk and soy milk were completely coagulated to a firm substance. The calcium lactate gluconate citrate-containing soy milk appeared to have a somewhat increased viscosity after heat treatment, but was still pourable. The calcium lactate gluconate citrate-containing milk has also coaglulated a little to become a quark like substance.

## Claims

1. Process for the preparation of a calcium-fortified protein-based beverage wherein calcium gluconate citrate or calcium lactate gluconate citrate is added to the protein-based beverage to be calcium-fortified.

2. Process according to claim 1 comprising the steps of:
a) directly adding calcium gluconate citrate or calcium lactate gluconate citrate to the protein-based beverage to be calcium-fortified,
b) pasteurising the resulting calcium-fortified protein based beverage.

3. Process according to claim 1 or 2 comprising the steps of:
a) preparing a pre-slurry comprising calcium gluconate citrate or calcium lactate gluconate citrate and part of the protein-based beverage to be fortified,
b) adding said pre-slurry to the rest of protein-based beverage to be calcium-fortified, or vice versa
c) pasteurising the resulting calcium-fortified protein based beverage.

4. Process according to claim 1 comprising the steps of:
a) preparing a pre-slurry comprising calcium gluconate citrate or calcium lactate gluconate citrate and part of a pasteurised protein-based beverage to be fortified,
b) adding said pre-slurry to the rest of the pasteurised protein-based beverage to be calcium-fortified or vice versa.

5. Process according to any one of preceding claims 1-4 wherein the protein-based beverage is based on milk.

6. Process according to any one of preceding claims 1-4 claim 1 wherein the protein-based beverage is based on soy-milk.

7. Process for the preparation of a calcium-fortified protein-based beverage according any one of the preceding claims wherein the beverage is calcium-fortified by means of calcium lactate gluconate citrate.

8. Process for the preparation of a calcium-fortified protein-based beverage according to any one of the preceding claims, wherein the beverage is calcium-fortified by means of calcium gluconate citrate.

9. Process for the preparation of a calcium-fortified protein-based beverage according to any one of preceding claims, **characterised in that** calcium gluconate citrate or calcium lactate gluconate citrate is added in such an amount that the beverage comprises more than 3% of the Recommended Daily Allowance (RDA) of calcium, preferably from about 10% to about 100% RDA, most preferably from about 10% to about 40% of the RDA, per unit portion of the beverage.

10. Process for the preparation of a calcium-fortified protein-based beverage according to any one of the preceding claims, **characterised in that** additional nutrient mineral cations are added to the beverage to be calcium-fortified.

11. Process according to claim 10, wherein the additional nutrient mineral cations are added as part of the counter-cations of the calcium gluconate citrate or calcium lactate gluconate citrate.

12. Process for the preparation of calcium-fortified beverage according to any of the preceding claims wherein the beverage is made in the form of a ready-to-drink beverage.

13. Process for the prepartion of a calcium-fortified beverage according to any of the preceding claims wherein the beverage is made in the form of a syrup, concentrate, or a powdered drink.

14. Process according to any one of claims 13-15 wherein at least part of the protein-based beverage to be fortified is replaced by juice.

15. Food product comprising calcium-fortified beverage obtainable by a process according to any one of the preceding claims.

16. Meal replacement beverage comprising calcium-fortified protein based beverage obtainable by a process according to any one of the preceding claims.

## Patentansprüche

1. Verfahren zur Herstellung eines mit Calcium angereicherten Getränks auf Proteinbasis, wobei Calciumgluconatcitrat oder Calciumlactatgluconatcitrat zu dem Getränk auf Proteinbasis hinzugefügt wird, welches mit Calcium angereichert werden soll.

2. Verfahren gemäß Anspruch 1, das die Schritte umfasst:
(a) direktes Hinzufügen von Calciumgluconatcitrat oder Calciumlactatgluconatcitrat zu dem Getränk auf Proteinbasis, das mit Calcium angereichert werden soll,
(b) Pasteurisieren des resultierenden mit Calcium angereicherten Getränk auf Proteinbasis.

3. Verfahren gemäß Anspruch 1 oder 2, das die Schritte umfasst:
(a) Herstellen eines Vorbreis, umfassend Calciumgluconatcitrat oder Calciumlactatgluconatcitrat und einen Teil des Getränks auf Proteinbasis, das angereichert werden soll,
(b) Hinzufügen des Vorbreis zu dem Rest des Getränks auf Proteinbasis, das mit Calcium angereichert werden soll, oder umgekehrt
(c) Pasteurisieren des resultierenden mit Calcium angereicherten Getränks auf Proteinbasis.

4. Verfahren gemäß Anspruch 1, das die Schritte umfasst:
(a) Herstellen eines Vorbreis, umfassend Calciumgluconatcitrat oder Calciumlactatgluconatcitrat und einen Teil des pasteurisierten Getränks auf Proteinbasis, das angereichert werden soll,
(b) Hinzufügen des Vorbreis zu dem Rest des pasteurisierten Getränks auf Proteinbasis, das mit Calcium angereichert werden soll, oder umgekehrt.

5. Verfahren gemäß einem der vorhergehenden Ansprüche 1 bis 4, wobei das Getränk auf Proteinbasis auf Milch basiert.

6. Verfahren gemäß einem der vorhergehenden Ansprüche 1 bis 4, wobei das Getränk auf Proteinbasis auf Sojamilch basiert.

7. Verfahren zur Herstellung eines mit Calcium angereicherten Getränks auf Proteinbasis gemäß einem der vorhergehenden Ansprüche, wobei das Getränk durch Calciumlactatgluconatcitrat mit Calcium angereichert wird.

8. Verfahren zur Herstellung eines mit Calcium angereicherten Getränks auf Proteinbasis gemäß einem der vorhergehenden Ansprüche, wobei das Getränk durch Calciumgluconatcitrat mit Calcium angereichert wird.

9. Verfahren zur Herstellung eines mit Calcium angereicherten Getränks auf Proteinbasis gemäß einem der vorhergehenden Ansprüche, **dadurch gekennzeichnet, dass** Calciumgluconatcitrat oder Calciumlactatgluconatcitrat in solch einer Menge zugefügt wird, dass das Getränk mehr als 3% der empfohlenen Tagesdosis (Recommended Daily Allowance, RDA) an Calcium umfasst, vorzugsweise von etwa 10% bis etwa 100% RDA, am meisten bevorzugt von etwa 10% bis etwa 40% der RDA pro Mengeneinheit des Getränks.

10. Verfahren zur Herstellung eines mit Calcium angereicherten Getränks auf Proteinbasis gemäß einem der vorhergehenden Ansprüche, **dadurch gekennzeichnet, dass** anorganische Kationen zur Nahrungsergänzung zu dem Getränk, das mit Calcium angereichert werden soll, hinzugefügt werden.

11. Verfahren gemäß Anspruch 10, wobei die anorganischen Kationen zur Nahrungsergänzung als Teil der Gegenkationen von Calciumgluconatcitrat oder Calciumlactatgluconatcitrat hinzugefügt werden.

12. Verfahren zur Herstellung eines mit Calcium angereicherten Getränks gemäß einem der vorhergehenden Ansprüche, wobei das Getränk in der Form eines trinkbereiten Getränks hergestellt wird.

13. Verfahren zur Herstellung eines mit Calcium angereicherten Getränks gemäß einem der vorhergehenden Ansprüche, wobei das Getränk in der Form eines Sirups, Konzentrats oder eines Trinkpulvers hergestellt wird.

14. Verfahren gemäß Anspruch 13, wobei zumindest ein Teil des Getränks auf Proteinbasis, das angereichert werden soll, durch Saft ersetzt wird.

15. Lebensmittel, umfassend ein mit Calcium angereichertes Getränk, erhältlich durch ein Verfahren gemäß einem der vorhergehenden Ansprüche.

16. Getränk als Ersatzmahlzeit, umfassend ein mit Calcium angereichertes Getränk auf Proteinbasis, erhältlich durch ein Verfahren gemäß einem der vorhergehenden Ansprüche.

## Revendications

1. Procédé de préparation d'une boisson à base de protéines enrichie en calcium dans lequel du citrate gluconate de calcium ou du citrate gluconate lactate de calcium est ajouté à la boisson à base de protéines devant être enrichie en calcium.

2. Procédé selon la revendication 1 comprenant les étapes consistant à :
a) ajouter directement du citrate gluconate de calcium ou du citrate gluconate lactate de calcium dans la boisson à base de protéines devant être enrichie en calcium,
b) pasteuriser la boisson à base de protéines enrichie en calcium en résultant.

3. Procédé selon la revendication 1 ou 2 comprenant les étapes consistant à :
a) préparer une pâte de préparation comprenant du citrate gluconate de calcium ou du citrate gluconate lactate de calcium et une partie de la boisson à base de protéines devant être enrichie,
b) ajouter ladite pâte de préparation au reste de la boisson à base de protéines devant être enrichie en calcium, ou vice-versa
c) pasteuriser la boisson à base de protéines enrichie en calcium en résultant.

4. Procédé selon la revendication 1 comprenant les étapes consistant à :
a) préparer une pâte de préparation comprenant du citrate gluconate de calcium ou du citrate gluconate lactate de calcium et une partie d'une boisson pasteurisée à base de protéines devant être enrichie,
b) ajouter ladite pâte de préparation au reste de la boisson pasteurisée à base de protéines devant être enrichie en calcium ou vice-versa.

5. Procédé selon l'une quelconque des revendications précédentes 1 à 4 dans lequel la boisson à base de protéines est à base de lait.

6. Procédé selon l'une quelconque des revendications précédentes 1 à 4 dans lequel la boisson à base de protéines est à base de lait de soja.

7. Procédé de préparation d'une boisson à base de protéines enrichie en calcium selon l'une quelconque des revendications précédentes dans lequel la boisson est enrichie en calcium au moyen de citrate gluconate lactate de calcium.

8. Procédé de préparation d'une boisson à base de protéines enrichie en calcium selon l'une quelconque des revendications précédentes, dans lequel la boisson est enrichie en calcium au moyen de citrate gluconate de calcium.

9. Procédé de préparation d'une boisson à base de protéines enrichie en calcium selon l'une quelconque des revendications précédentes, **caractérisé en ce que** du citrate gluconate de calcium ou du citrate gluconate lactate de calcium est ajouté dans une quantité telle que la boisson contient plus de 3 % des Apports Journaliers Recommandés (AJR) en calcium, de préférence entre environ 10 % et environ 100 % des AJR, de manière plus préférée entre environ 10 % et environ 40 % des AJR, par portion unitaire de boisson.

10. Procédé de préparation d'une boisson à base de protéines enrichie en calcium selon l'une quelconque des revendications précédentes, **caractérisé en ce que** des cations minéraux nutritifs supplémentaires sont ajoutés à la boisson devant être enrichie en calcium.

11. Procédé selon la revendication 10, dans lequel les cations minéraux nutritifs supplémentaires sont ajoutés en tant que partie des contre cations du citrate gluconate de calcium ou du citrate gluconate lactate de calcium.

12. Procédé de préparation d'une boisson enrichie en calcium selon l'une quelconque des revendications précédentes dans lequel la boisson est préparée sous la forme d'une boisson prête-à-boire.

13. Procédé de préparation d'une boisson enrichie en calcium selon l'une quelconque des revendications précédentes dans lequel la boisson est préparée sous la forme d'un sirop, d'un concentré ou d'une poudre de préparation pour boisson.

14. Procédé selon l'une quelconque des revendications 13 à 15 dans lequel au moins une partie de la boisson à base de protéines devant être enrichie est remplacée par du jus.

15. Produit alimentaire comprenant une boisson enrichie en calcium pouvant être obtenue par un procédé selon l'une quelconque des revendications précédentes.

16. Boisson substitut de repas comprenant une boisson à base de protéines enrichie en calcium pouvant être obtenue par un procédé selon l'une quelconque des revendications précédentes.
